# EUROPEAN PATENT APPLICATION

(11) **EP 1 569 425 A1**
(43) Date of publication of application: **31.08.2005**
(21) Application number: 04020771.4
(22) Date of filing: 01.09.2004
(51) Int. Cl.: H04M 1/725

(54) **Handheld PDA wirelessly connected to mobile phone and capable of playing MP3 music. Music is interrupted if incoming call is received.**

(30) Priority: 24.02.2004 CN 04105911
(71) Applicant: Partner Tech. Corporation, Taipei (TW)
(72) Inventor: Yueh, Wen-Hsiang, Linkou Township Taipei County 244 (TW)
(74) Representative: UEXKÜLL & STOLBERG

(57) **Abstract**

A personal digital assistant incorporating wireless earphones is provided. The present personal digital assistant includes: a personal digital assistant circuit to decode audio compressed files under a music-playing mode to produce audio signals to earphones and collect voice signals through a microphone; and an attachment mechanism to combine the wireless earphones to the personal digital assistant to accomplish an electrical connecting interface between the wireless earphones and the personal digital assistant circuit, such that the personal digital assistant circuit can pause music playing under the music-playing mode responsive to a ring indication made from a mobile phone, and establishing two-way audio communication with the mobile phone through the wireless earphones. Another embodiment of this invention provides a personal digital assistant having a wireless transceiver, which can establish a wireless connectivity with a mobile phone and allow two-way audio communication therebetween, enabling the personal digital assistant circuit to communicate with the mobile phone under the music-playing mode responsive to a ring indication received from a mobile phone at any time.

## Description

### BACKGROUND OF THE INVENTION

### FIELD OF THE INVENTION

The present invention relates to a personal digital assistant (PDA), and more particularly, to personal digital assistant to connect with an external wireless earphone or embedded an internal wireless transceiver, so that it can pause a music playing and answer a call from a mobile phone under a playing operation.

### DESCRIPTION OF THE RELATED ART

Nowadays, it is a trend to integrate a personal digital assistant having a handset function and a handset having a PDA function to become one. However, there are still differences between the personal digital assistant and handset in respect of their appearance and usage. For example, the display screen of the personal digital assistant is larger than that of the handset; the input of the personal digital assistant is via a touch panel, while the handset is via a keyboard.

The conventional personal digital assistant has had a capability for processing digital audio signals, as like the functions of MP3 audio signal playing and record. In other words, a user can listen to music with the personal digital assistant or record voice with it. However, the conventional personal digital assistant cannot pause music playing to answer an incoming call on a wireless handset under a music-playing mode. When listening to music with the personal digital assistant, the user might, on the one hand, miss the call on the wireless handset; while on the other hand, if the user does not miss the call, the user has to take off the PDA's earphones in order to answer the call, creating an inconvenience for the user.

Moreover, the personal digital assistant needs to be built in a bluetooth module or inserted with an external wireless bluetooth card to achieve the communication with bluetooth devices. The current wireless bluetooth earphones can connect with the bluetooth handset to answer a call therefrom. If the personal digital assistant can incorporate the wireless bluetooth earphones, it becomes possible for the personal digital assistant to connect with the bluetooth devices without being built in the bluetooth module or inserted with the external wireless bluetooth card. However, conventional technology has not yet been used for the development of related products between the personal digital assistant and the wireless bluetooth earphones.

### SUMMARY OF THE INVENTION

Seeing the as yet unexplored use of conventional technology in connecting the personal digital assistant and wireless handsets, the objective of this invention provides a personal digital assistant incorporating wireless earphones, which can pause music playing to answer a call made from the handset.

Another objective of the present invention is to provide a personal digital assistant built in a wireless transceiver, which can pause music playing to establish wireless connectivity with a mobile phone.

Yet another objective of the present invention is to provide a personal digital assistant with external wireless earphones to establish wireless connectivity with the mobile phone.

Finally, another objective of the present invention is to provide a personal digital assistant having functions of voice playing and recording, which is built in a wireless transceiver or connects with external wireless earphones to pause music playing to establish two-way audio communication with the mobile phone and record a content of a conversation.

In one embodiment, the present invention provides a personal digital assistant, including a personal digital assistant circuit connected with earphones and a microphone to decode audio compressed files under a music-playing mode to produce audio signals transmitted to the earphones and receive voice signals from the microphone; and an attachment mechanism to combine the wireless earphones to the housing of the personal digital assistant to accomplish an electrical connecting interface therebetween. Therefore, the personal digital assistant can pause music playing at any time responsive to a ring indication received from the mobile phone, and establish the two-way audio communication with the mobile phone via the wireless earphones.

Wherein, the electrical connecting interface at least comprises: control signals between the wireless earphones and the personal digital assistant circuit; audio signals transmitted from the mobile phone; and voice signals transmitted to the mobile phone.

Wherein, the electrical connecting interface further comprises: ground signals connecting the wireless earphones and the personal digital assistant.

Wherein, the control signals at least comprise: ring indication signals transmitted from the mobile phone; and response signals transmitted from the personal digital assistant circuit operating the wireless earphones.

Wherein, the wireless earphone and the mobile phone are a bluetooth earphone and a bluetooth mobile phone, respectively.

Wherein, the personal digital assistant circuit produces a ringing signal in the earphones in response to the ringing indicating signal.

In another embodiment of the present invention, the personal digital assistant provides a music-playing mode and is built in a wireless transceiver, enabling a wireless connectivity with the mobile phone to allow two-way communication therebetween. Therefore, the personal digital assistant circuit can pause music playing to establish a conversation with the mobile phone at any time responsive to the ringing indication made from the mobile phone.

In one embodiment based on the bluetooth communication technology, the personal digital assistant of the present invention comprises: a memory unit to store audio compressed files; a DSP (Digital Signal Processing) processor to decode audio compressed files under a music-playing mode, to produce audio signals; an earphone to convert the audio signals into sound; a microphone to receive voice signals to transmit to the DSP processor; an input unit to transmit a command requested by a user to the DSP processor; and an attachment mechanism to accomplish an electrical connecting interface between the wireless bluetooth earphones and the DSP processor, the electrical connecting interface at least comprises: control signals between the wireless bluetooth earphones and the DSP processor; an audio signal transmitted from the mobile phone; and voice signals transmitted to the mobile phone. The wireless bluetooth earphones establishes two-way audio communication with a bluetooth handset such that the DSP processor can pause music playing under the music-playing mode at any time responsive to the ringing indication made from the bluetooth handset, and establish a conversation with the bluetooth handset.

In another embodiment based on the bluetooth communication technology, the personal digital assistant of the present invention comprises a personal digital assistant circuit including: a memory unit to store audio compressed data; a DSP processor to decode the audio compressed data to produce audio signals under a music-playing mode; an earphone to convert the audio signals to sound; a microphone to receive voice signals to transmit to the DSP processor; an input unit to transmit a command requested by a user to the DSP processor; and an attachment mechanism to accomplish an electrical connecting interface between wireless bluetooth earphones and the DSP processor. The electrical connecting interface at least comprises: control signals between the wireless bluetooth earphones and the DSP processor; audio signals transmitted from the mobile phone; and voice signals transmitted to the mobile phone. The wireless bluetooth earphones establish two-way audio communication with a bluetooth handset such that the DSP processor can pause music playing under the music-playing mode at any time responsive to a ringing indication made from the bluetooth handset, and establish a conversation with the bluetooth handset.

In another embodiment based on the bluetooth communication technology, the personal digital assistant comprises a personal digital assistant circuit including: a memory unit to store audio compressed data; a DSP processor to decode the audio compressed data under a music-playing mode to produce audio signals; earphones to convert the audio signals to sound; a microphone to receive voice signals to transmit to the DSP processor; an input unit to transmit a command requested by a user to the DSP processor; and a bluetooth module, the DSP processor can receive a ringing indication made from the mobile phone via the bluetooth module to pause music playing under the music-playing mode, and establish two-way audio communication with the bluetooth handset, proceeding a conversation with the earphones and the microphone.

Still another embodiment based on the bluetooth communication technology, the personal digital assistant of the present invention comprises a personal digital assistant circuit including: a memory unit to store audio compressed data; a DSP processor to decode the audio compressed data under a music-playing mode to produce audio signals; earphones to convert the audio signals to sound; a microphone to receive voice signals to transmit to the DSP processor; an input unit to transmit a command requested by a user to the DSP. processor, and an expanded slot for inserted with an external wireless bluetooth card, the wireless bluetooth card establishes wireless connectivity with a bluetooth handset to allow two-way audio communication such that the DSP processor can pause music playing under the music-playing mode at any time responsive to a ringing indication made from the mobile phone, and establish a conversation with the bluetooth handset.

Based on the above embodiments, the present invention provides a method for establishing two-way audio communication between the personal digital assistant under the music-playing mode and the mobile phone. This method comprises the following steps:
connecting an electrical connecting interface between the wireless earphones and the personal digital assistant circuit;
receiving a ring indication signal from the wireless earphones via the electrical connecting interface;
transmitting a response signal to the wireless earphones via the electrical connecting interface;
receiving sound signals from the wireless earphones via the electrical connecting interface; and
transmitting voice signals to the wireless earphones via the electrical connecting interface.

The personal digital assistant incorporating the wireless earphones can pause music playing to answer a phone call made from the mobile phone. When MP3 files is being played under the music-playing mode, the personal digital assistant will, in response to a ring indication from the mobile phone, produce a ringing signal in the wireless earphones. Thus, the user can determine whether the music-playing mode is paused and a conversation with the mobile phone is established.

### BRIEF DESCRIPTION OF DRAWINGS

Fig. 1 is a schematic diagram illustrating the usage of communication between a personal digital assistant and a mobile phone according to a first embodiment of the present invention.
Fig. 2 is a block diagram of the personal digital assistant of the first embodiment of the present invention.
Fig. 3 is a block diagram of the personal digital assistant of a variance of the first embodiment of the present invention.
Fig. 4 is a flow chart of the method of the first embodiment of the present invention.
Fig. 5 is a schematic diagram of an electrical connecting interface between the personal digital assistant and the wireless earphones.
Fig. 6 is a detailed block diagram of Fig. 5.

### DETAILED DESCRIPTION OF THE INVENTION

Although the present invention will be described in details with the attached figures from the preferred embodiments according to the present invention, the skilled artisan in the art should realize that they can modify the invention described in the application, and achieve the same effect as the present invention. Thus, it should be noted that the following description is only a broad disclosure to the skilled artisan in the art, and the contents should not be construed as the limitation to the present invention.

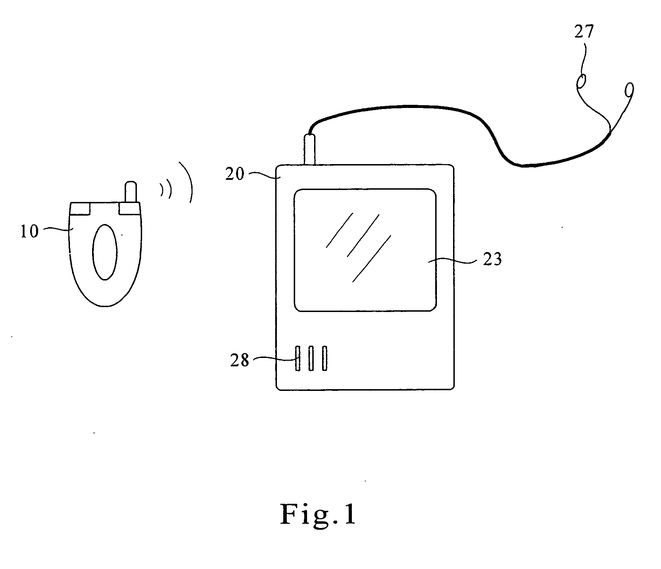

Fig. 1 shows a schematic diagram illustrating the usage of communication between a personal digital assistant 20 and a mobile phone according to a first embodiment of the present invention. The personal digital assistant 20 practices a music-playing mode, making the personal digital assistant play MP3 files or other audio compressed files, and sends music playing to earphones 27. The personal digital assistant has a wireless transceiver or is inserted with an external wireless transceiver or a wireless bluetooth card, enabling wireless connectivity between the personal digital assistant 20 and a mobile phone 10 to allow two-way audio communication therebetween. Therefore, the personal digital assistant 20 can produce a audio ringing signal to the earphones 27 in response to a ringing indication made from the mobile phone 10 at any time, and also produce a picture indication on a display unit 23, so that the user may determine whether the music-playing mode is paused and a conversation with the mobile phone 10 is established.

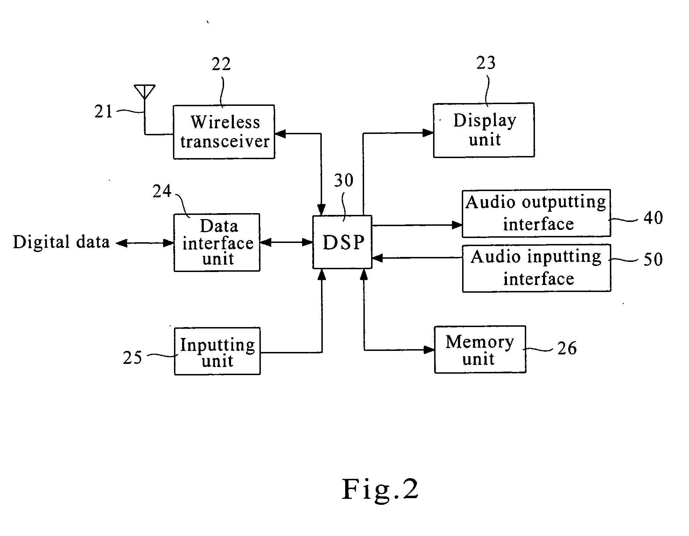

Fig. 2 shows a block diagram of the personal digital assistant 20 of the first embodiment of the present invention. The personal digital assistant 20 includes: a memory unit 26 to store MP3 files or audio compressed files, the memory unit 26 is a non-volatile memory device; a central processing unit or DSP processor 30, which can be programmable to process digital signals, the DSP processor 30 executes a program stored in the memory unit 26 to decodeed the MP3 files or the audio compressed files to produce corresponding audio signals during the music-playing mode; an audio outputting interface 40, being a connection port for the earphones 27, to transmit the audio signals outputted from the DSP processor 30 to the earphones 27; an audio inputting interface 50, being a connection port for the microphone 28, to receive voice signals from the microphone 28 to transmit to the DSP processor 30; a data interface unit 24, being a USB (Universal Serial Bus) port, to receive external digital signals such as MP3 files or audio compressed files, which are later processed by the DSP processor 30 and stored in the memory unit 26; a display unit 23, connected to the DSP processor 30, to display the status of the playing operation and the picture indication responsive to the ringing indication made from the mobile phone 10; and an inputting unit 25, to transmit a command requested by a user to the DSP processor 30, so that the user may determine whether the music-playing mode is paused. The inputting unit 25 can touch the display unit 23 to produce an electrical signal corresponding to a user's command, which is transmitted to the DSP processor 30, or comprises a number of keys for producing the electronic signal corresponding to the user's command, which is transmitted to the DSP processor 30.

The personal digital assistant 20 further comprises a wireless transceiver 22. The wireless transceiver 22 can be built in the personal digital assistant circuit or be inserted in an expanded slot to connect to the personal digital assistant 20. The wireless transceiver 22 connects to an antenna 21 and the DSP processor 30, and the DSP processor 30 operates the wireless transceiver 22 to allow two-way audio communication with the mobile phone 10. In this embodiment, the exemplary wireless transceiver 22 is a bluetooth transceiver, and the DSP processor 30 operates bluetooth handset profiles to achieve two-way audio communication with the bluetooth handset. When MP3 files or audio compressed files are played under the music-playing mode, once the DSP processor 30 receives a ringing indication from the mobile phone 10 via the wireless transceiver 22, the DSP processor 30 would practice a suspending operation to determine whether the music playing is paused and enabling a conversation with the mobile phone 10 by using the earphones 27 and microphone 28.

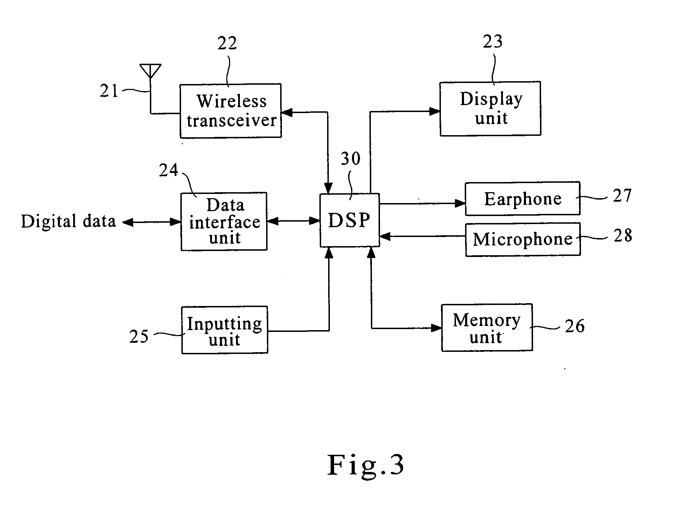

Fig. 3 shows a block diagram of the personal digital assistant 20 of a variance of the first embodiment of the present invention. In the variance, the personal digital assistant 20 comprises: a memory unit 26, a DSP processor 30, a data interface unit 24, a display unit 23 and an inputting unit 25. With regard to the same connections and functionality shown in Fig. 1, the personal digital assistant 20 further comprises: the earphones 27 to convert analog audio signals outputted from the DSP processor 30 to sound; and the microphone 28 to collect voices, producing corresponding electronic signals and transmitting the electronic signals to DSP processor 30.

Referring to Fig. 3 again, the personal digital assistant 20 further comprises the wireless transceiver 22. The wireless transceiver 22 can be built in the personal digital circuit or inserted in an expanded slot to connect to the personal digital assistant 20. The wireless transceiver 22 connects the antenna 21 and the DSP processor 30, and the DSP processor 30 operates the wireless transceiver 22 to allow two-way audio communication with the mobile phone 10. In this embodiment, the wireless transceiver 22 is a bluetooth transceiver, and the DSP processor 30 operates the bluetooth handset profiles to allow two-way audio communication with the bluetooth handset. When MP3 files or audio compressed files are played under the music-playing mode, once the DSP processor 30 receives a ringing indication from the mobile phone 10 via the wireless transceiver 22, the DSP processor 30 would practice a suspending operation to determine whether the music playing is paused and enabling a conversation with the mobile phone 10 by using the earphones 27 and microphone 28.

Based on the embodiments shown in Fig. 2 and Fig. 3, the DSP processor 30 executes a program stored in the memory unit 26 to practice the suspending operation. During suspension, the DSP processor 30 will first produce an audio ringing signal in the earphone 27; and then, according to the command transmitted by the inputting unit 25, the DSP processor 30 will either stop the ringing indication of the mobile phone 10, or pause the music playing and enable a conversation with the mobile phone 10 through the earphones 27 and microphone 28.

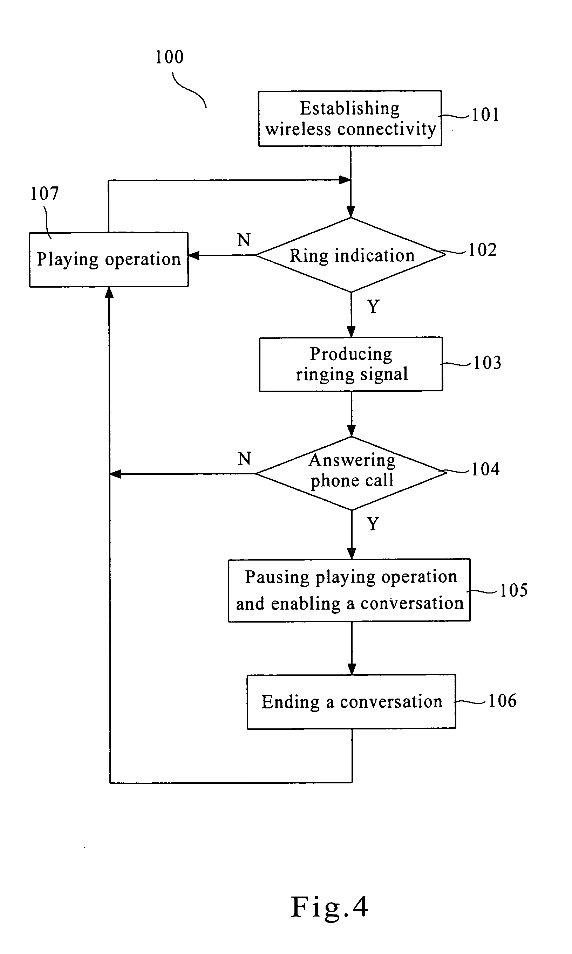

Fig. 4 is a flow chart of the first embodiment of the present invention. This invention provides a method applied especially to the personal digital assistant 20, allowing the personal digital assistant 20 to establish two-way audio communication with the mobile phone 10; the block diagrams of the personal digital assistant 20 are shown in Fig. 3 and Fig. 4. The method 100 of the present invention comprises the following steps:

### Step 101: Establishing wireless connectivity

The DSP processor 30 operates the wireless transceiver 22 to establish a wireless connectivity with the mobile phone 10 through the antenna 21. The wireless connectivity is based on either bluetooth communication or RF connectivity technologies, such as DECT or 802.11 b. In these embodiments, the wireless transceiver 22 is a bluetooth transceiver, and the DSP processor 30 operates bluetooth handset profiles to realize two-way audio communication with a bluetooth handset.

### Step 102: Ring indication

The DSP processor 30 determines whether a ring indication from the mobile phone 10 is received; if there is no ring indication, the DSP processor 30 continues the playing operation at Step 107 and remains in that status. If there is a ring indication, the DSP processor 30 would enter the suspending operation, which comprises the following steps:

### Step 103: Producing ringing signal

In order to signify the ring indication of the mobile phone 10 to the user, the DSP processor 30 produces a ringing signal to transmit to the earphones 27 and a picture indication on the display unit 23. In one embodiment of the present invention, if a MP3 file is played under the music-playing mode of the DSP processor 30, the ringing signal will be mixed to the audio signal corresponding to the MP3 file and transmitted to the earphones 27. If the user does not answer the incoming call, the DSP processor 30 will stop transmitting the audio ringing signal to the earphones 27 based on the user's command received through the inputting unit 25, and inform the mobile phone 10 that the call is terminated, and continue the playing operation.

### Step 104: Answering phone call

Based on the user's command received through the inputting unit 25, the DSP processor 30 determines whether or not to answer the incoming call. If the DSP processor 30 concludes that the user has commanded to answer the call from the mobile phone 10, then the DSP processor 30 executes Step 105.

### Step 105: Pausing playing operation and enabling a conversation

The DSP processor 30 stops transmitting the audio ringing signal and pauses music playing, establishing talking status in order to communicate with the mobile phone 10 by using the earphones 27 and microphone 28. In one of the embodiments of the present invention, the DSP processor 30 can store the content of the conversation in the memory unit (26) according to the command requested by the user through the inputting unit (25). Furthermore, the file containing the content of the conversation can also be outputted from the data interface unit (24).

### Step 106: Ending a conversation

Based on the command requested by the user through the inputting unit 25, the DSP processor 30 can terminate communication with the mobile phone 10, and continue to execute Step 107, the playing operation.

### Step 107: Playing operation

The DSP processor 30 practices the music-playing mode. The DSP processor 30 decodees the audio compressed data or MP3 files to produce audio signals, and transmitting the audio signals to the earphones 27.

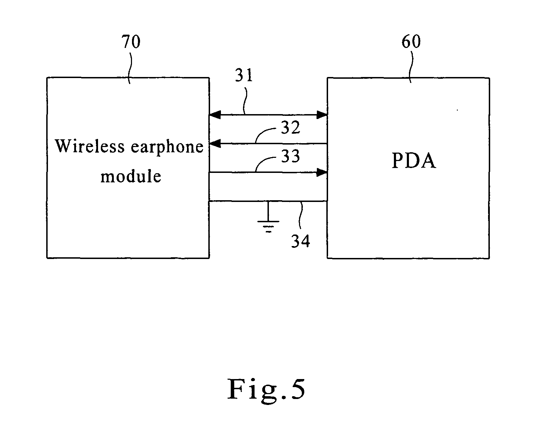

Fig. 5 is a schematic diagram of a second embodiment of the present invention, illustrating an electrical connecting interface between the personal digital assistant 20 and the wireless earphones. In this embodiment of the present invention, the personal digital assistant 20 can electrically combine with a wireless earphone by an attachment mechanism. The personal digital assistant 20 includes a personal digital assistant circuit 60 to decode audio compressed files or MP3 files to produce audio signals transmitted to an earphone, and receive voice signals from a microphone for further processing, for example, to create audio compressed files. The wireless earphone comprises a wireless earphone module 70 that can establish wireless connectivity with a mobile phone, allowing for two-way audio communication. In this embodiment, the personal digital assistant 20 can incorporate the wireless bluetooth earphones for establishing wireless bluetooth communication with a bluetooth handset.

In this embodiment of the invention, the personal digital assistant 20 comprises an attachment mechanism to attach the wireless earphones onto the body of the personal digital assistant 20, as well as to accomplish an electrical connecting interface between the personal digital assistant circuit 60 and the wireless earphone module 70. One of the embodiments of the invention is that the attachment mechanism between the personal digital assistant 20 and the wireless earphone is in fact in a holding mechanism design. Its contact surface comprises a number of electrical contacts, allowing the personal digital assistant circuit 60 and the wireless earphone module 70 to realize electrical connection. Besides, the electrical connecting interface of the attachment mechanism is like a design of electrical contacts between a handset and charging socket.

The electrical connecting interface comprises at least: control signals 31 that is the control signals between the wireless earphone and the personal digital assistant circuit 60, the control signals 31 at least comprises: the ring indication signal of the mobile phone transmitted from the wireless earphone module 70 to the personal digital assistant circuit 60, and a response signal outputted from the personal digital assistant circuit 60 to the wireless earphone module 70 for operating the wireless earphone; a sound signal 33 transmitted by the mobile phone and outputted to the personal digital assistant circuit 60 via the wireless earphone module 70 after two-way audio communication has been established between the wireless earphone module 70 and the mobile phone; and a voice signal 32 collected through the microphone and transmitted to the wireless earphone module 70 through the personal digital assistant circuit 60. The response signal is outputted by the personal digital assistant circuit 60 based on a user's command received through the inputting unit to determine whether or not answer the incoming call.

The electrical connecting interface further comprises a ground signal 34, for forming an electrical loop between the personal digital assistant circuit 60 and the wireless earphone module 70.

In another embodiment of this invention, the signals of the electrical connecting interface represent become a data bus between the wireless earphone module 70 and the personal digital assistant circuit 60; the control signal 31, voice signal 32, sound signal 33, ring indication signal, response signal, etc. are all coded data signals, rather than just being signals of electrical contacts.

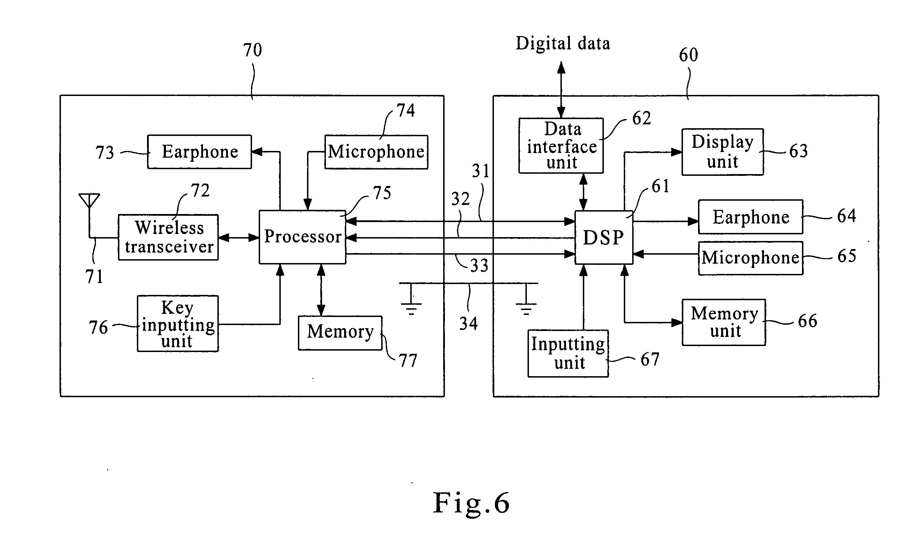

Fig. 6 is a detailed block diagram of Fig. 7. The wireless earphone module 70 includes: a memory 77, that is a non-volatile memory for storing a program; an earphone 73 to convert analog audio signals into sound; a microphone 74 to convert a voice signal into an electronic signal; a key inputting unit 76 that features a number of keys for producing electrical signals corresponding to users' commands, and transmits these signals to the processor 75; a wireless transceiver 72 connected to an antenna 71, for tuning and demodulating RF; and a processor (75) to execute the program stored in the memory 77 and operate the wireless transceiver 72, allowing for two-way audio communication with a mobile phone. Thus, users may enable a conversation with a mobile phone using the earphone 73 and the microphone 74.

In one embodiment of the present invention, when wireless connectivity has been established between the wireless earphone module 70 and a mobile phone, the processor 75 will produce an indication signal 31 responsive to the ring indication of the mobile phone, and transmit this signal to the personal digital assistant circuit 60 via the electrical connecting interface. Meanwhile, the processor 75 will receive a response signal from the personal digital assistant circuit 60, and determine whether or not to establish two-way audio communication with the mobile phone. When two-way audio communication has been established, the processor 75 will receive the sound signal from the mobile phone via the wireless transceiver 72, and output the sound signal 33 to the personal digital assistant circuit 60; at the same time, it will also receive a voice signal 32 from the personal digital assistant circuit 60, and transmit the voice signal to the mobile phone via the wireless transceiver 72.

Referring to Fig. 6 again, the personal digital assistant circuit 60 comprises: a memory unit 66, which is a non-volatile memory device, to store MP3 or other audio compressed files; a central processing unit or a DSP processor 61, which can be programmable to process digital signals; the DSP processor 61 executes a programs stored in the memory 66 to decode MP3 or audio compressed files and produce corresponding audio signals during a playing operation; an earphone 64 to convert audio signals outputted from the DSP processor 61 into sound; a microphone 65 to receive a voice signal and transmit the voice signal to the DSP processor 61; a data interface unit 62, that is a USB port, to receive and transmit external digital data such MP3 files or audio compressed files, which is later processed by the DSP processor 61 and stored in the memory 66; a display unit 63 connected to the DSP processor 61, displaying the status of the play operation; and an inputting unit 67 to transmit user's commands to the DSP processor 61, the inputting unit 67 touches the display unit 63 to produce electronic signals corresponding to the user's commands to the DSP processor 61, or includes a number of keys for producing electronic signals corresponding to the user's command, that transmits these signals to the DSP processor 61.

In this invention, the DSP processor 61 receives an indication signal through the electrical connecting interface and produces a ringing signal in the earphone 64 in response to the indication signal. If the DSP processor 61 is playing MP3 files at the moment, then the ringing signal will be mixed to the audio signal corresponding to the played MP3 file and outputted to the earphone 64. Based on the user's command received through the inputting unit 67, the DSP processor 61 determines whether to answer the call from the mobile phone or not, and transmits a response signal to the processor 75. When two-way audio communication has been established between the wireless earphone module 70 and the mobile phone, the DSP processor 61 will receive sound signals from the mobile phone via the wireless earphone module 70, and output the sound signals to the earphone 64; at the same time, the DSP processor 61 will also receive voice signals from the microphone 65, and transmit the voice signals to the mobile phone via the wireless earphone module 70. Thus, users can enable a conversation with a mobile phone by using the earphone 64 and microphone 65.

In addition, the personal digital assistant 20 also implements the method of Fig. 4. The personal digital assistant can pause the music playing under the music-playing mode responsive to the ring indication signal made from the mobile phone at any time, enabling a conversation with the mobile phone.

Although the present invention has been described in considerable detail with reference to certain preferred embodiments thereof, those skilled in the art can easily understand that all kinds of alterations and changes can be made within the spirit and scope of the appended claims. Therefore, the spirit and scope of the appended claims should not be limited to the description of the preferred embodiments contained herein.

## Claims

1. A personal digital assistant, comprising a personal digital assistant circuit, said personal digital assistant circuit including:
a memory unit, to store audio compressed data;
a processor, to decode said audio compressed data under a music-playing mode, to produce audio signals;
an earphone, responsive to said audio signals to convert said audio signals into sound;
a microphone, responsive to voice signals to provide electronic signals transmitted to said processor; and
an inputting unit, to transmit a command requested by a user to said processor; and
an attachment mechanism to accomplish an electrical connecting interface between an wireless earphone and said processor, said electrical connecting interface comprises at least:
a control signal between said wireless earphone and said processor;
a sound signal transmitted from a mobile phone; and
a voice signal transmitted to said mobile phone.

2. The personal digital assistant of claim 1, wherein said electrical connecting interface further comprises a ground signal between said wireless earphone and said personal digital assistant circuit.

3. The personal digital assistant of claim 1, wherein said control signal comprises at least: a ring indication signal made from said mobile phone and a response signal transmitted from said personal digital assistant circuit for operating said wireless earphone.

4. The personal digital assistant of claim 1, wherein said wireless earphone is a bluetooth earphone and said mobile phone is a bluetooth handset.

5. The personal digital assistant of claim 1, wherein said processor produces a ringing signal under said music-playing mode to said wireless earphone.

6. The personal digital assistant of claim 5, wherein said personal digital assistant circuit pauses music playing under the music-playing mode responsive to said ring indication made from said mobile phone at any time.

7. The personal digital assistant of claim 1, wherein said processor communicates with said wireless earphone via said electrical connecting interface to enable two-way audio communication between said processor and said mobile phone.

8. The personal digital assistant of claim 7, wherein said processor pauses the music playing under the music-playing mode responsive to said ringing indication made from said mobile phone at any time to establish two-way audio communication with said mobile phone through said wireless earphone.

9. The personal digital assistant of claim 8, wherein said personal digital assistant further comprises a display unit connected to said processor, said display unit displaying a picture indication responsive to said ring indication.

10. The personal digital assistant of claim 9, wherein said inputting unit touches said display unit to produce electronic signals transmitted to said process responsive to user's commands to determine whether or not to pause the music-playing mode.

11. The personal digital assistant of claim 9, wherein said inputting unit includes a number of keys to produce electronic signals to said processor responsive to user's commands to determine whether or not to pause the music-playing mode.

12. The personal digital assistant of claim 1, wherein said processor executes a program stored in said memory unit to operate the music-playing mode.

13. The personal digital assistant of claim 1, wherein said personal digital assistant circuit further comprises a data interface unit connected to said processor such that said processor receives MP3 files or audio compressed data through said data interface.

14. The personal digital assistant of claim 13, wherein said data interface unit is a USB port.

15. A personal digital assistant, comprising:
a personal digital assistant circuit connecting with a wireless earphone and a microphone, said personal digital assistant circuit decoding audio compressed files to produce audio signals transmitted to said earphone under a music-playing mode and collecting voice signals through said microphone; and
an attachment mechanism to accomplish an electrical connecting interface between said wireless earphone and said personal digital assistant circuit;
wherein said personal digital assistant circuit pauses music playing under said music-playing mode responsive to a ring indication transmitted from said wireless earphone, and establishing two-way audio communication with a mobile phone through said wireless earphone.

16. The personal digital assistant of claim 15, wherein said electrical connecting interface comprises at least: a control signal between said wireless earphone and said processor; a sound signal transmitted from said mobile phone; and an audio signal transmitted to said mobile phone.

17. The personal digital assistant of claim 16, wherein said control signal comprises at least: a ring indication made from said mobile phone; and a response signal transmitted from said personal digital assistant circuit for operating said wireless earphone.

18. The personal digital assistant of claim 15, wherein said wireless earphone is a bluetooth earphone and said mobile phone is a bluetooth handset.

19. The personal digital assistant of claim 15, wherein said personal digital assistant circuit produces an audio ringing signal transmitted to said wireless earphone under said music-playing mode.

20. The personal digital assistant of claim 20, wherein said personal digital assistant circuit further comprises a display unit to display a picture indication responsive to said ringing indication signal.

21. The personal digital assistant of claim 20, wherein said display unit is touched to produce electronic signals responsive to user's commands to determine whether or not to pause said music-playing mode.

22. A personal digital assistant, comprising a music-playing mode and a wireless transceiver, said wireless transceiver establishing a wireless connectivity with a mobile phone to enable two-way audio communication between said personal digital assistant and said mobile phone, said personal digital assistant circuit pausing music playing under a music-playing mode responsive to a ring indication made from said mobile phone at any time to enable a conversation with said mobile phone.

23. The personal digital assistant of claim 22, wherein said wireless transceiver is a wireless bluetooth card and said mobile phone is a bluetooth handset.

24. The personal digital assistant of claim 22, wherein said wireless transceiver is a part of said personal digital assistant circuit.

25. The personal digital assistant of claim 22, wherein said personal digital assistant has an expanded slot for being inserted with means for realizing a wireless transceiver.

26. The personal digital assistant of claim 22, wherein said personal digital assistant has an earphone and a microphone, said personal digital assistant pauses music playing under said music-playing mode responsive to said ring indication made from said mobile phone through said wireless transceiver, and establishes two-way audio communication with said mobile phone by using said earphone and said microphone.

27. A personal digital assistant, comprising a personal digital assistant circuit, said personal digital assistant circuit including: a memory unit to store audio compressed data; a processor to decode said audio compressed data to produce audio signals under a music-playing mode; an earphone to convert said audio signals to sound; a microphone to collect voice signals transmitted to said processor; and an inputting unit to produce electronic signals responsive to user's commands and transmit said electronic signals to said processor; and a bluetooth module, wherein said processor pauses music playing responsive to a ring indication made from a mobile phone through said bluetooth module to establish two-way audio communication with a bluetooth handset, enabling a conversation with said bluetooth handset by using said earphone and said microphone.

28. A personal digital assistant, comprising a personal digital assistant circuit, said personal digital assistant circuit including: a memory unit to store audio compressed data; a DSP processor to decode said audio compressed data under a music-playing mode to produce audio signals; an earphone to convert said audio signals to sound; a microphone to collect voice signals for being transmitted to said DSP processor; an inputting unit to transmit user's commands to said DSP processor; and an expanded slot for being inserted with an external wireless bluetooth card, enabling a wireless connectivity with a bluetooth handset to allow two-way audio communication, such that the DSP processor pauses the music-playing mode responsive to a ring indication made from said mobile phone to establish a conversation with said bluetooth handset.

29. A method for a personal digital assistant under a music-playing mode to establish two-way audio communication with a mobile phone, said method comprising:
establishing an electrical connectivity between a wireless earphone and said personal digital assistant;
receiving a ring indication made from said wireless earphone through said electrical connecting interface, wherein said personal digital assistant pauses music playing under the music-playing mode responsive to said ring indication at any time, and establishes communication with a mobile phone through said wireless earphone;
receiving sound signals transmitted from said wireless earphone though said electrical connecting interface; and
transmitting voice signals to said wireless earphone through said electrical connecting interface.

30. The method of claim 29, further comprising: connecting a ground signal between said wireless earphone and said personal digital assistant and a response signal transmitted from said personal digital assistant for operating said wireless earphone through said electrical connecting interface.

31. The method of claim 29, further comprising: producing an audio ringing signal responsive to said ring indication.
